# FASCICULE DE BREVET EUROPEEN

(11) **EP 3 057 781 B1**
(45) Date de publication et mention de la délivrance du brevet: **25.08.2021**
(21) Numéro de dépôt: 14786197.5
(22) Date de dépôt: 17.10.2014
(51) Int. Cl.: B29D 24/00, B32B 3/12, B32B 3/08, B32B 5/26, B60R 13/00, B29C 70/86, B29B 15/12, B29C 70/46

(54) **PIECE STRUCTURELLE DE VEHICULE AUTOMOBILE, LEGERE ET ROBUSTE ET SA METHODE DE FABRICATION**
STRUKTURKOMPONENTE EINES LEICHTEN UND ROBUSTEN KRAFTFAHRZEUGS UND VERFAHREN ZUR HERSTELLUNG DAVON
LIGHTWEIGHT AND ROBUST MOTOR VEHICLE STRUCTURAL PART AND METHOD FOR THE MANUFACTURE THEREOF

(30) Priorité: 18.10.2013 FR 1360189
(43) Date de publication de la demande: 24.08.2016
(73) Titulaire: Faurecia Automotive Industrie, 92000 Nanterre (FR); PSA Automobiles SA, 78300 Poissy (FR); Université De Reims Champagne-Ardenne, 51097 Reims Cedex (FR)
(72) Inventeur: ROUSSEAU, Frédéric, 28320 Gallardon (FR); KHALFALLAH, Moussa, 29900 Concarneau (FR); VANFLETEREN, François, F-27300 Bernay (FR); ABBES, Boussad, F-51360 Beaumont-sur-Vesle (FR); MARCEL, Valérie, F-55150 Brandeville (FR)
(74) Mandataire: Lavoix
(86) Numéro de dépôt international: PCT/EP2014/072372
(87) Numéro de publication internationale: WO 2015/055847

(56) Documents cités:
- EP-A1- 0 579 000
- EP-A1- 2 311 629
- WO-A1-2009/083494
- WO-A1-2012/104318
- FR-A1- 2 982 283
- US-A- 3 422 796
- None

## Description

La présente invention concerne une pièce composite structurelle de véhicule automobile, à la fois particulièrement légère et présentant des caractéristiques mécaniques satisfaisantes.

Plus particulièrement, l'invention concerne un panneau pour véhicule automobile, par exemple une tablette arrière de masquage de coffre, un faux plancher d'habitacle ou de coffre, ou un sous-moteur.

On connaît déjà, dans l'état de la technique, une pièce structurelle de véhicule automobile, du type comportant :
- des premier et second mats, formant des peaux extérieures, chaque mat comportant des fibres et une résine liant les fibres, et
- un écarteur interposé entre les premier et second mats, ces premier et second mats étant fixés sur des faces opposées de l'écarteur.

On appelle « mat » tout ensemble essentiellement fibreux, associé ou non à une résine d'imprégnation. Un tel mat peut être de type non-tissé, auquel cas il est généralement réalisé par cardage-nappage (communément appelé « voie sèche »), par voie papetière (également appelée « voie humide »), par cardage pneumatique (également appelé « airlay ») ou réalisé directement après extrusion de filaments tels les soufflés-fondus (non-tissés de type « spunbond » ou « melt blown »).

Les cahiers des charges imposent généralement certaines caractéristiques pour une telle pièce structurelle. En particulier, la pièce structurelle doit présenter une masse la plus faible possible, de bonnes caractéristiques mécaniques, principalement un bon comportement en flexion et en fluage à température élevée (85°C), et être propre à présenter des formes tridimensionnelles, par exemple présenter des formes concaves permettant l'inclusion de pièces complémentaires telles que des poignées, et/ou présenter des bords présentant des profils particuliers, notamment arrondis ou incurvés.

Les cahiers des charges requièrent également généralement que la pièce structurelle inclue des composants d'origine naturelle, pour des raisons de recyclage ou de moindre impact environnemental.

Enfin, une telle pièce structurelle doit rester économique, si bien que son procédé de fabrication doit être particulièrement simple et ne demander que peu d'investissements, et ce procédé ne doit notamment présenter qu'une seule étape de pressage ne nécessitant qu'un seul moule.

Les pièces structurelles d'origine naturelle connues dans l'état de la technique ne parviennent pas à répondre à toutes ces exigences. En particulier, les panneaux homogènes à base de bois ou d'agglomérés, ou à base de mats de lin, de chanvre, de kénaf, etc. comprimés présentent une masse trop importante.

Par ailleurs, des pièces structurelle de type sandwich réalisées en une seule étape de pressage, comportant un écarteur, généralement en nid d'abeilles et en carton, et des peaux à base de mats de fibres naturelles (bois, chanvre, étoupe de lin, kénaf) et de résine, ne présentent généralement pas des caractéristiques mécaniques satisfaisantes, notamment en ce qui concerne le comportement en flexion et en fluage, car l'orientation des fibres n'est pas privilégiée, la porosité et le taux volumique des fibres dans les peaux de ces pièces restant faibles, d'où une faible densité.

La réalisation d'une telle pièce structurelle, réalisée avec deux mats de fibres courtes de lin et un écarteur en carton en une seule étape de pressage, est notamment décrite dans WO 2012 056202. Néanmoins, avec un tel procédé, on constate que si l'on parvient bien à assembler les composants pour obtenir une pièce de type sandwich, la porosité des mats est importante (densité faible). En effet, si on cherche à comprimer fortement les mats pour obtenir une densité optimale élevée, la pression exercée par le moule devient trop élevée et provoque l'écrasement de l'écarteur. Or, une densité élevée critique est nécessaire pour réaliser un véritable composite qui apportera les meilleures performances mécaniques, puisque la résine doit être pressée fortement pour occuper le plus d'espace possible entre les fibres.

Ce problème d'écrasement de l'écarteur résulte du fait que les mats, avant compression, sont trop poreux (densité inférieure à 0,1) à cause d'une orientation aléatoire des fibres inhérente au procédé de cardage/nappage utilisé dans WO 2012 056202, et nécessitent donc des pressions extrêmement fortes pour être correctement densifiés. En particulier, un tel mat de 500 g/m², ayant une épaisseur de l'ordre de 10 cm, devrait être ramené après compression à environ 0,5 mm d'épaisseur pour présenter une densification satisfaisante.

C'est la raison pour laquelle les pièces structurelles de type sandwich devant répondre à ces cahiers des charges sévères sont habituellement réalisées en deux étapes, par exemple comme cela est décrit dans FR 2 971 198, à savoir une première étape consistant à réaliser les mats à part, et une seconde étant consistant à associer les mats à l'écarteur. Dans ce cas, par contre, on se heurte à un problème de coût (dû à l'outillage et au temps de cycle), tel qu'évoqué précédemment.

Par ailleurs, le document EP 0 579 000 A1 divulgue une pièce composite structurelle semblable à celle du préambule de la revendication 1. Le document FR 2 982 283 A1 quant à lui divulgue une méthode de fabrication d'un voile à fibres longues unidirectionnelles.

L'invention a notamment pour but de remédier à ces inconvénients, en proposant une pièce composite structurelle réalisée en une seule étape de pressage, relativement légère (de l'ordre de 2000g/m²), économique, présentant de bonnes caractéristiques mécaniques grâce à des mats de densité élevées (porosité faible) s'approchant de véritables composites, et de préférence comprenant des fibres naturelles.
A cet effet, l'invention a notamment pour objet une pièce structurelle de véhicule automobile selon la revendication 1.

On rappelle que, dans un voile continu de fibres parallèles, qui sera décrit plus en détail dans la suite, les fibres sont parfaitement organisées de manière à occuper un volume minimal, si bien qu'un tel voile permet d'obtenir un composite avec un taux volumique de fibres optimal. Un tel voile peut en outre être très léger (la limite de poids inférieure est 25g/m²). Un tel voile forme une nappe de fibres unidirectionnelles.

Par ailleurs, un tel voile comporte des fibres longues, si bien que, une fois renforcées par une résine, ce voile présente un module d'Young relativement élevé, pour une densité également élevée et une porosité faible. En particulier, un voile de fibres de lin longues (entre 50 et 80 cm) présente habituellement un poids faible (environ 50 g/m²) et une largeur importante (jusqu'à 2 mètres). Un tel voile unidirectionnel, associé à une résine thermodurcissable, présente d'excellentes caractéristiques mécaniques (module d'Young de 15 à 35 GPa (GigaPascal)), selon la nature et le taux de résine.

Une telle pièce structurelle selon l'invention permet donc de remplir toutes les exigences des cahiers des charges telles que définies précédemment, et peut de manière avantageuse comporter des fibres d'origine naturelle.

Une pièce structurelle selon l'invention peut comporter en outre l'une ou plusieurs des caractéristiques suivantes, prises seules ou selon toutes combinaisons techniquement envisageables.
- Au moins l'un, de préférence chacun, des premier et second mats comporte une pluralité de voiles continus de fibres empilés, par exemple entre trois et huit voiles empilés.
- Les voiles sont empilés de sorte que les fibres parallèles de chaque voile sont disposées de manière à former un angle non nul, notamment un angle droit avec les fibres parallèles de chaque autre voile adjacent.
- Chacun des premier et second mats comportant une pluralité de voiles continus de fibres empilés, les premier et second mats comportent respectivement des nombre différents de voiles empilés.
- Au moins une partie des fibres parallèles sont des fibres naturelles, par exemple de lin, de chanvre, de kénaf ou de jute.
- Au moins une partie des fibres parallèles sont des fibres artificielles ou synthétiques, notamment thermoplastiques.

L'invention concerne également un procédé de fabrication d'une pièce structurelle telle que définie précédemment, selon la revendication 7. Un procédé de fabrication selon l'invention peut comporter en outre l'une ou plusieurs des caractéristiques suivantes, prises seules ou selon toutes combinaisons techniquement envisageables.
- Le composé pour l'imprégnation comporte au moins un adjuvant, par exemple des pigments ou colorants, un tensioactif et/ou un épaississant.
- L'étape d'imprégnation est réalisée au moyen de deux cylindres dont au moins l'un comporte des rainures de réception du composé, le voile de fibres passant entre les cylindres de sorte que les cylindres exercent une pression sur le voile, assurant la pénétration du composé dans le voile.
- L'étape d'imprégnation comporte une vaporisation du composé sur le voile, suivie d'un exprimage.
- L'étape d'imprégnation comporte une vaporisation d'un composé sur le voile, suivie d'un séchage, puis une imprégnation est réalisée au moyen de deux cylindres dont au moins l'un comporte des rainures de réception du composé, le voile de fibres passant entre les cylindres de sorte que les cylindres exercent une pression sur le voile, assurant la pénétration du composé dans le voile.
- Le composé présente un extrait sec élevé.
- Chaque voile continu de fibres est réalisé au cours des étapes suivantes : - une étape d'amenée en parallèle d'une pluralité de rubans disjoints de fibres, au moins un ruban contenant des fibres longues, notamment des fibres longues naturelles ; - une étape de dispersion des rubans adjacents à travers un champ de pointes pour former une bande de fibres parallèles ; - une étape de mise sous tension et d'étirage de la bande dans le champ de pointes parallèlement à un axe de défilement ; et - une étape de liaison des fibres de la bande étirée pour former le voile.
- Le procédé de fabrication comprend les étapes suivantes : - une étape d'empilement, dans un moule chauffant, d'un premier mat, d'un écarteur et d'un second mat, l'écarteur étant disposé entre le premier et le second mat, et au moins l'un des premier et second mats comportant au moins un voile continu de fibres imprégné par le composé comportant une résine thermodurcissable ; et - une étape de compression et de chauffage de l'empilement, le chauffage étant réalisé à une température et pendant une durée permettant la réticulation de la résine thermodurcissable.

L'invention sera mieux comprise à la lecture de la description qui va suivre, donnée uniquement à titre d'exemple et faite en se référant aux figures annexées parmi lesquelles :
- la figure 1 est une vue partielle schématique en coupe d'une pièce structurelle selon un exemple de mode de réalisation de l'invention ;
- la figure 2 représente schématiquement et partiellement un mat de la pièce structurelle de la figure 1 ;
- la figure 3 représente schématiquement la pièce structurelle de la figure 1 au cours de son procédé de fabrication.

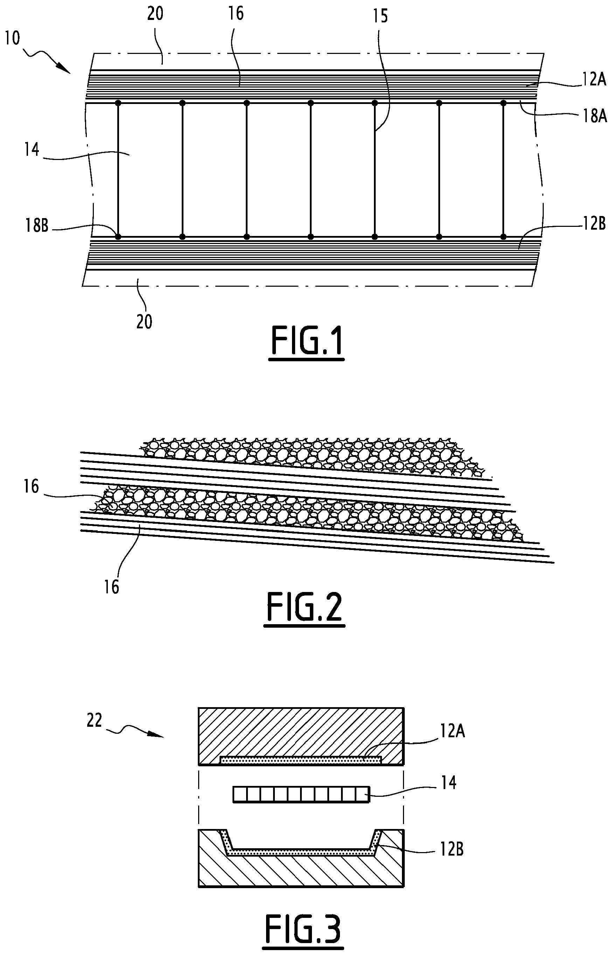

On a représenté, sur la figure 1, une pièce composite structurelle 10 de véhicule automobile. La pièce 10 est une pièce structurante du véhicule automobile, par exemple un panneau, tel qu'une tablette arrière de masquage de coffre, un faux plancher d'habitacle ou de coffre, ou un sous-moteur.

La pièce composite structurelle 10 comporte un premier 12A et un second 12B mat, et un écarteur 14, interposé entre les deux mats 12A, 12B. Plus particulièrement, les premier 12A et second 12B mats sont fixés sur des faces opposées de l'écarteur 14.

Avantageusement, l'écarteur 14 est réalisé à base d'une structure alvéolaire ou en nid d'abeille. Ainsi, l'écarteur 14 présente une pluralité de parois 15 sensiblement perpendiculaires à un plan moyen de la pièce structurelle 10, les parois 15 délimitant des espaces centraux de contour fermé formant les alvéoles. Ainsi, chaque espace central ou alvéole débouche de part et d'autre en regard du premier 12A ou second 12B mat.

Les alvéoles définissent par exemple des mailles polygonales, notamment hexagonales.

L'écarteur 14 est avantageusement réalisé en un matériau léger, tel que du papier ou du carton.

La masse surfacique de l'écarteur 14 est faible. Cette masse est de préférence inférieure à 1500 g/m² et est sensiblement comprise entre 400 g/m² et 1200 g/m².

Ainsi, la pièce structurelle 10 présente une légèreté adéquate, du fait de la faible densité de l'écarteur 14. Plus particulièrement, la pièce structurelle présente une masse surfacique d'environ 2 kg/m².

Au moins l'un des premier 12A et second 12B mats comporte au moins un voile continu de fibres 16, ledit voile 16 comprenant une pluralité de fibres parallèles liées entre elles par une résine thermodurcissable, au moins une partie des fibres de ce voile présentant une longueur supérieure à 20 centimètres, notamment à 50 centimètres, par exemple comprise entre 50 et 80 centimètres.

Plus particulièrement, dans l'exemple représenté, chacun des premier 12A et second 12B mats comporte une pluralité de voiles 16 continus de fibres, ces voiles 16 étant empilés les uns sur les autres. Par exemple, chacun des mats 12A, 12B comporte entre trois et huit voiles empilés.

Avantageusement, les fibres parallèles de chaque voile 16 sont disposées de manière à former un angle non nul, notamment un angle droit avec les fibres parallèles de chaque autre voile adjacent, comme cela est notamment représenté sur la figure 2. Une telle disposition permet de renforcer le mat 12A, 12B correspondant, en fonction de l'orientation des contraintes de la pièce finie en situation. Chaque fibre présente ainsi une orientation précise, contrairement aux mats connus de l'état de la technique réalisés par exemple par cardage/nappage, notamment tel que cela est décrit dans WO 2012 056202.

On note que les premier 12A et second 12B mats peuvent comporter le même nombre de voiles 16 empilés, ou en variante des nombres différents de voiles 16 empilés. En effet, selon la fonction de destination de la pièce structurelle 10, les deux faces de cette pièce structurelle 10 ne sont par exemple pas soumises aux mêmes contraintes, si bien qu'il n'est pas nécessaire que ces deux faces présentent les mêmes caractéristiques structurelles. Ainsi, une face de la pièce structurelle 10 qui est soumise à peu de contraintes pourrait ne comporter qu'un faible nombre de voiles 16. La réduction du nombre de voiles 16 sur une face permet de réduire la masse de la pièce structurelle 10.

De préférence, au moins une partie des fibres parallèles de chaque voile sont des fibres naturelles. Les fibres naturelles présentent de nombreux avantages par rapport aux fibres artificielles ou synthétiques.

En particulier, les fibres naturelles présentent généralement une faible densité, un coût relativement peu élevé et un caractère écologique. En outre, les fibres naturelles sont renouvelables annuellement et peuvent donc être produites sans épuiser les ressources naturelles.

Dans ce cadre, les fibres issues du lin sont largement cultivées et exploitées dans de nombreux domaines, et notamment pour réaliser des matériaux composites. Les fibres de lin sont extraites de la tige de la plante « flax » et peuvent être exploitées soit sous forme de faisceaux de fibres techniques, soit sous forme de fibres élémentaires. Dans les deux cas, ces fibres peuvent avoir une longueur comprise entre 30 et 80 cm. Le terme « fibre de lin » désigne ici indifféremment la fibre technique ou la fibre élémentaire. Ces fibres longues sont à différentier des étoupes de lin qui sont des fibres courtes généralement inférieures à 10 cm.

Dans un mode de réalisation, toutes les fibres d'au moins l'un des voiles 16 sont constituées de fibres longues naturelles. En variante, une partie des fibres d'au moins l'un des voiles 16 est formé par des fibres artificielles ou synthétiques, distinctes des fibres longues naturelles, ou par un mélange de ces fibres.

Les fibres longues naturelles sont avantageusement des fibres extraites de végétaux, notamment des fibres de lin. En variante, les fibres longues naturelles sont des fibres de sisal, de jute, de chanvre, de kénaf. Des fibres artificielles sont par exemple choisies parmi les fibres de cellulose régénérée tel la Viscose.

Les fibres synthétiques sont formées à partir de dérivés du pétrole ou de molécules issues de la chimie verte (par exemple l'éthylène issue du bio éthanol). On peut citer, parmi les fibres convenant au présent procédé, les fibres polyoléfines telles que les fibres de polyéthylène ou/et de polypropylène, de polyester, de polyamide, de polyimide, et leurs mélanges. Elles peuvent être également des fibres bi-composantes formées d'un polymère et d'un copolymère, le polymère et son copolymère ayant des points de fusion différents. Ainsi Les fibres synthétiques choisies sont préférentiellement à base de polymères thermoplastiques, ce qui permet, lors d'une étape de thermoformage à la température de fusion du polymère, de réaliser un liage des fibres de lin.

Avantageusement, la proportion massique de fibres longues d'origine naturelle dans chaque voile 16 est supérieure à 50% de la masse totale des fibres de ce voile 16.

Les fibres du voile 16 sont parallèles à une direction longitudinale. Ainsi, les fibres longues du voile 16 sont généralement disposées parallèlement les unes aux autres Ce type de voile est donc fondamentalement différent des voiles obtenus par cardage, qui est la voie habituellement la plus utilisée d'obtention d'un voile. En effet les voiles de carde doivent être réalisés à partir de fibres de longueur généralement inférieure à 15 cm et comportant un certain degré de frisure pour permettre le cardage en lui-même et la cohésion transversale du voile. Un tel type de voile présente donc par nature des fibres superposées même si les fibres restent orientées majoritairement dans le sens de travail de la carde. Lorsque ce voile sera superposé à lui-même par nappage le mat résultant sera donc extrêmement gonflant à cause des multiples croisements de fibres.

En revanche, le voile 16 utilisé dans le procédé de l'invention comporte des fibres parfaitement parallélisées (le parallélisme étant encore accentué par le fait que les fibres naturelles telles le lin ou le chanvre présentent très peu de frisure). La cohésion transversale de ce type de voile n'est possible que grâce à l'imprégnation d'une résine car les fibres ne se chevauchent pas.

Afin de faciliter l'adhésion de chaque mat 12A, 12B sur l'écarteur 14, cet écarteur 14 peut être équipé de manière optionnelle d'une feuille 18A, 18B, par exemple en papier ou carton, agencée à l'interface entre ce mat 12A, 12B et l'écarteur 14.

Par ailleurs, au moins l'une des faces de la pièce structurelle peut être de manière optionnelle pourvue d'un parement 20 donnant son aspect esthétique à la pièce structurelle 10.

Un procédé de fabrication de la pièce structurelle 10 va maintenant être décrit. Un tel procédé comporte tout d'abord la réalisation d'au moins un voile continu de fibres. Comme cela sera décrit plus en détail ci-dessous, cette réalisation de voiles comporte une étape d'amenée en parallèle d'une pluralité de rubans disjoints de fibres, au moins un ruban, de préférence chacun des rubans, contenant des fibres longues, par exemple des fibres longues naturelles, puis une étape de dispersion des rubans adjacents à travers un champ de pointe pour former une bande de fibres parallèles, une étape de mise sous tension et d'étirage de la bande dans le champ de pointe parallèlement à un axe de défilement.

Plus particulièrement, chaque voile 16 est formé à partir de rubans longitudinaux de fibres qui sont amenés en parallèle et qui sont dispersés pour former une bande de fibres parallèles, les fibres de la bande étant ensuite liées.

Par « ruban », on entend un élément longitudinal comportant un assemblage de fibres, en particulier de fibres longues. Les rubans sont par exemple obtenus par peignage ou par cardage, puis par mise sous tension de fibres individuelles qui sont ensuite regroupées les unes avec les autres pour former un lien longitudinal.

L'épaisseur du ruban est généralement de l'ordre de sa largeur. Il est par exemple compris entre 0,5 et deux fois sa largeur.

Le ruban peut être avantageusement obtenu à partir de rubans unitaires qui sont doublés par superposition les uns sur les autres. L'épaisseur des rubans est par exemple supérieure à 15 mm et comprise entre 10 mm et 40 mm, et la largeur des rubans est par exemple inférieure à 30 mm.

Dans le cas où le voile 16 est constitué de fibres longues naturelles, par exemple de fibres longues de lin, tous les rubans sont des rubans de fibres longues naturelles avantageusement obtenus par doublage de rubans unitaires de fibres longues naturelles.

Dans le cas où le voile 16 comporte des fibres synthétiques additionnelles, au moins un ruban est formé à partir d'un ruban unitaire constitué de fibres longues naturelles et à partir d'au moins un ruban unitaire constitué de fibres synthétiques. Lorsque des fibres artificielles ou synthétiques sont employées, le ruban peut être réalisé par craquage à partir d'un ensemble de filaments continus directement issu de l'extrusion ou par l'utilisation d'un convertisseur (convertissage). Ainsi l'étape de cardage peut être évitée.

Dans tous les cas, les rubans unitaires sont chacun dispersés dans un champ de pointes (non représenté), puis sont mis sous tension et sont regroupés par superposition les uns sur les autres.

Le champ de pointes comporte par exemple une pluralité de rangées de pointes parallèles et transversales par rapport à un axe de défilement. Un système de mise sous tension est prévu, comportant au moins un rouleau amont et au moins un rouleau aval disposés transversalement de part et d'autre du champ de pointes.

Ainsi, pour le procédé de fabrication de la pièce structurelle 10, on fournit au moins un voile continu de fibres ainsi réalisées, comprenant des fibres longues, au moins une partie des fibres longues du voile présentant une longueur supérieure à 20 centimètres, notamment à 50 centimètres.

Le procédé de fabrication comporte ensuite une étape d'imprégnation de ce voile par un composé comportant notamment une résine thermodurcissable.

Ce composé peut comporter en outre au moins un adjuvant, par exemple des pigments ou colorants, un tensioactif et/ou un épaississant. Ainsi, le voile imprégné peut présenter un aspect esthétique grâce à ce composé, par exemple un aspect bois. Dans ce cas, il ne sera pas nécessaire d'ajouter un parement 20 sur les faces de la pièce structurelle 10, ce qui permet de réduire d'autant la masse de cette pièce structurelle.

Ladite étape d'imprégnation peut être réalisée de différentes manières, mais elle est toujours suivie d'un séchage pour l'élimination de l'eau contenue dans le composé, qui permettra à la résine d'assurer un premier collage des fibres entre elles mais sans réticuler. Par exemple, l'étape d'imprégnation peut consister en une vaporisation du composé sur le voile. Cette méthode convient bien aux voiles très légers (<50g/m²). Pour les voiles plus lourds, la résine risque de ne pas pénétrer totalement l'épaisseur du voile.

En variante, on peut réaliser cette étape d'imprégnation au moyen de tout dispositifs d'enduction par contact connus, comme par exemple le dispositif appelé « mille points » comprenant deux cylindres, dont au moins l'un comporte des rainures de réception du composé, le voile des fibres passant entre ces cylindres de sorte que ces cylindres exercent une pression sur ce voile, assurant ainsi la pénétration du composé dans le voile. Cette seconde méthode permet une bonne imprégnation en particulier pour les voiles lourds (50 à 150 g/m²), mais présente un risque d'enroulement des extrémités libres des fibres autour des cylindres, ce qui peut provoquer des bourrages.

Dans une autre variante, l'étape d'imprégnation comporte une vaporisation du composé sur le voile, suivie d'un premier séchage, puis une imprégnation supplémentaire réalisée comme précédemment au moyen d'un dispositif « mille points », suivie d'un second séchage. En effet, dans ce cas, la première vaporisation de composé sur le voile permet de solidariser les extrémités libres des fibres en surface du voile, afin de limiter les risques que ces extrémités libres s'enroulent autour des cylindres du dispositif « mille points ».

Avantageusement, ledit composé présente un extrait sec élevé. Ainsi, le séchage est facilité, ce qui permet une vitesse élevée de la ligne d'imprégnation, et des moyens limités de séchage.

Il est à noter que la résine thermodurcissable doit permettre de maintenir les fibres entre elles sans réticuler. En effet, la réticulation est réalisée ultérieurement pendant la fabrication proprement dite de la pièce structurelle 10. Une résine apte à remplir ces deux fonctions de maintien du voile par liaison transitoire des fibres après séchage puis de formation du composite par réticulation dans un moule chaud est l'Acrodur® de BASF. Le pourcentage en poids d'extrait sec de la résine varie généralement entre 35% et 65% du poids total du voile imprégné.

Il convient de noter que la liaison transitoire entre les fibres est relativement faible et n'a pour but que de permettre la manipulation du voile, notamment pour autoriser son empilement par des moyens automatiques afin de constituer le mat 12A, 12B, par exemple en fin de la ligne d'imprégnation. De ce fait, les fibres resteront mobiles entre elles dans le moule lorsque des contraintes plus élevées leur seront appliquées, au moment de la fermeture du moule, avant réticulation de la résine.

Ainsi, il est possible de mettre en forme les mats 12A, 12B, notamment pour leur donner une forme tridimensionnelle, car les fibres des voiles 16 gardent une bonne mobilité les unes par rapport aux autres tant que la résine n'a pas réticulé.

Cette fabrication est réalisée au moyen d'un moule chauffant 22, représenté sur la figure 3.

Ainsi, le procédé de fabrication comporte une étape d'empilement, dans ce moule chauffant 22, du premier mat 12A, de l'écarteur 14, et du second mat 12B, l'écarteur 14 étant disposé entre le premier 12A et le second 12B mat.

Le procédé comporte ensuite une étape de compression et de chauffage de l'empilement, le chauffage étant réalisé à une température et pendant une durée permettant la réticulation de la résine thermodurcissable. En réticulant, la résine lie fermement les fibres de chaque voile entre elles, et les différents voiles entre eux, ainsi que les mats 12A, 12B à l'écarteur 14.

Les mats 12A, 12B étant déjà particulièrement denses et de faible épaisseur, la compression peut être réalisée à une pression relativement faible, ce qui permet ainsi d'éviter une détérioration de l'écarteur 14.

La résine peut occuper la totalité de l'espace inter fibres et constituer ainsi la matrice d'un véritable composite.

Il est à noter qu'une seule étape de compression et de chauffage est nécessaire pour le procédé de fabrication, si bien que ce procédé de fabrication est particulièrement économique. En particulier, les mats 12A, 12B étant particulièrement minces et déjà très denses, il n'est pas nécessaire de réaliser une étape supplémentaire de compression de ces mats comme c'est le cas dans l'état de la technique. En particulier, un mat 12A, 12B comportant 45% d'extrait sec de résine Acrodur® (pourcentage en poids par rapport au poids total après imprégnation de séchage) réalisé par la superposition de trois voiles de 150 g/m² de fibres de lin a une épaisseur de l'ordre de 6 mm. Cette épaisseur devra être ramenée à 0,5 mm (densité 0,9) par compression dans le moule pour l'obtention d'un module d'Young de 20 Giga Pascal qui conduit à des propriétés mécaniques satisfaisantes de la pièce structurelle.

Les résines thermodurcissables conservant leurs propriétés à hautes températures le comportement au fluage de la pièce structurelle est excellent.

Avantageusement, les parties du moule 22 en contact avec les mats 12A, 12B peuvent être texturées, par exemple grainées, afin d'améliorer l'aspect de ces mats 12A, 12B, par exemple pour accentuer l'effet bois en créant des veinures ou un grain spécifique.

Comme indiqué précédemment, une feuille 18A, 18B peut être intercalée entre chaque mat 12A, 12B et l'écarteur 14, afin d'améliorer la fixation des mats 12A, 12B sur cet écarteur 14. En effet, l'écarteur 14 étant en nid d'abeilles, chaque mat 12A, 12B n'est relié par la résine thermodurcissable que sur les bords d'extrémité des parois 15 en l'absence d'une telle feuille 18A, 18B. De plus, l'adhésion entre l'écarteur 14 et les mats 12A, 12B est réalisée par la résine déjà contenue dans les mats 12A, 12B. La quantité de résine disponible à l'interface peut s'avérer insuffisante pour un bon collage.

En revanche, en présence d'une telle feuille 18A, 18B, chaque mat 12A, 12B est relié à cette feuille le long d'une surface continue. Ces feuilles 18A, 18B sont collées à l'écarteur 14, préférentiellement au moment de la fabrication de l'écarteur 14, par exemple à l'aide d'une colle dont la quantité peut être aisément choisie pour un collage optimal. De plus ce collage préalable peut s'effectuer de manière continue et n'occasionne ainsi pas de surcoût notable.

De plus ce collage préalable de feuilles peut s'effectuer à la continue et n'occasionne ainsi pas de surcoût notable.

Une telle feuille 18A, 18B peut être en papier ou en non tissé de type « spunbond » de faible grammage (40 à 60 g/m²).

En variante, l'écarteur 14 peut être enduit sur ses deux faces lors de sa fabrication, par la même résine thermodurcissable que celle servant à la réalisation des peaux. Ce dépôt de résine peut s'effectuer par vaporisation suivi d'un séchage sans réticulation et peut éventuellement concerner l'entièreté des parois des alvéoles pour assurer la continuité de la présence de la résine sur l'épaisseur de la pièce structurelle 10. Cet apport supplémentaire de résine à l'interface entre l'écarteur 14 et les mats 12A, 12B permet d'assurer une meilleure adhérence après formage des peaux sur l'écarteur 14.

Toutefois, de préférence, la pièce structurelle 10 ne comporte pas de telle feuille 18A, 18B, afin de limiter sa masse, et son procédé de fabrication ne comporte pas d'étape préalable de dépôt de résine sur l'écarteur 14 afin de conserver un procédé le plus simple possible.

En variante l'adhésion sur l'écarteur 14 est assurée par la fusion du pourcentage de fibres synthétiques initialement présentes dans le voile, le polymère desdites fibres pouvant également assurer le rôle de matrice en complément ou en substitution de la résine thermodurcissable.

On notera que l'invention n'est pas limitée au mode de réalisation qui a été décrit, mais pourrait présenter diverses variantes sans sortir du cadre des revendications.

## Revendications

1. Pièce composite structurelle (10) de véhicule automobile, du type comportant :
- des premier (12A) et second (12B) mats, chaque mat comprenant des fibres et une résine liant les fibres, et
- un écarteur (14) interposé entre les premier (12A) et second (12B) mats, les premier (12A) et second (12B) mats étant fixés sur des faces opposées de l'écarteur (14), dans lequel au moins l'un des premier (12A) et second (12B) mats comporte au moins un voile continu de fibres (16), **caractérisé en ce que** ledit voile présente un grammage inférieur ou égal à 150 g/m², ledit voile (16) comprenant une pluralité de fibres parallèles liées entre elles par une résine thermodurcissable, au moins une partie des fibres de chaque voile (16) présentant une longueur supérieure à 20 cm, notamment à 50 cm.

2. Pièce structurelle (10) selon la revendication 1, dans laquelle au moins l'un, de préférence chacun, des premier (12A) et second (12B) mats comporte une pluralité de voiles continus de fibres (16) empilés, par exemple entre trois et huit voiles (16) empilés.

3. Pièce structurelle (10) selon la revendication 2, dans laquelle les voiles (16) sont empilés de sorte que les fibres parallèles de chaque voile (16) sont disposées de manière à former un angle non nul, notamment un angle droit avec les fibres parallèles de chaque autre voile adjacent.

4. Pièce structurelle (10) selon la revendication 2 ou 3, dans laquelle chacun des premier (12A) et second (12B) mats comportant une pluralité de voiles continus de fibres (16) empilés, les premier (12A) et second (12B) mats comportent respectivement des nombre différents de voiles (16) empilés.

5. Pièce structurelle (10) selon l'une quelconque des revendications précédentes, dans laquelle au moins une partie des fibres parallèles sont des fibres naturelles, par exemple de lin, de chanvre, de kénaf ou de jute.

6. Pièce structurelle (10) selon l'une quelconque des revendications précédentes, dans laquelle au moins une partie des fibres parallèles sont des fibres artificielles ou synthétiques, notamment thermoplastiques.

7. Procédé de fabrication d'une pièce composite structurelle (10) de véhicule automobile selon l'une quelconque des revendications précédentes, comportant :
- la fabrication d'un mat (12A, 12B), comprenant les étapes suivantes :
• une étape de fourniture d'un voile continu de fibres (16) comprenant des fibres longues, au moins une partie des fibres longues du voile présentant une longueur supérieure à 20 cm, notamment à 50 cm, le voile présentant un grammage inférieur ou égal à 150 g/m², et
• une étape d'imprégnation du voile (16) par un composé comportant une résine thermodurcissable,
- l'assemblage d'un écarteur (14) avec des premier (12A) et second (12B) mats dont au moins un comporte un voile continu de fibres (16), l'écarteur étant interposé entre les premier (12A) et second (12B) mats, les premier (12A) et second (12B) mats étant fixés sur des faces opposées de l'écarteur (14).

8. Procédé de fabrication selon la revendication 7, dans lequel le composé pour l'imprégnation comporte au moins un adjuvant, par exemple des pigments ou colorants, un tensioactif et/ou un épaississant.

9. Procédé de fabrication selon la revendication 7 ou 8, dans lequel l'étape d'imprégnation est réalisée au moyen de deux cylindres dont au moins l'un comporte des rainures de réception du composé, le voile de fibres (16) passant entre les cylindres de sorte que les cylindres exercent une pression sur le voile (16), assurant la pénétration du composé dans le voile (16).

10. Procédé de fabrication selon la revendication 7 ou 8, dans lequel l'étape d'imprégnation comporte une vaporisation du composé sur le voile (16), suivie d'un exprimage.

11. Procédé de fabrication selon la revendication 7 ou 8, dans lequel l'étape d'imprégnation comporte une vaporisation d'un composé sur le voile (16), suivie d'un séchage, puis une imprégnation est réalisée au moyen de deux cylindres dont au moins l'un comporte des rainures de réception du composé, le voile de fibres (16) passant entre les cylindres de sorte que les cylindres exercent une pression sur le voile (16), assurant la pénétration du composé dans le voile (16).

12. Procédé de fabrication selon l'une quelconque des revendications 8 à 11, dans lequel le composé présente un extrait sec élevé.

13. Procédé de fabrication selon l'une quelconque des revendications 7 à 12, dans lequel chaque voile continu de fibres (16) est réalisé au cours des étapes suivantes :
- une étape d'amenée en parallèle d'une pluralité de rubans disjoints de fibres, au moins un ruban contenant des fibres longues, notamment des fibres longues naturelles ;
- une étape de dispersion des rubans adjacents à travers un champ de pointes pour former une bande de fibres parallèles ;
- une étape de mise sous tension et d'étirage de la bande dans le champ de pointes parallèlement à un axe de défilement ;
- une étape de liaison des fibres de la bande étirée pour former le voile (16).

14. Procédé de fabrication selon l'une quelconque des revendications 7 à 13, comprenant les étapes suivantes :
- une étape d'empilement, dans un moule chauffant, d'un premier mat (12A), d'un écarteur (14) et d'un second mat (12B), l'écarteur (14) étant disposé entre le premier (12A) et le second (12B) mat, et au moins l'un des premier (12A) et second (12B) mats comportant au moins un voile continu de fibres (16) imprégné par le composé comportant une résine thermodurcissable,
- une étape de compression et de chauffage de l'empilement, le chauffage étant réalisé à une température et pendant une durée permettant la réticulation de la résine thermodurcissable.

## Patentansprüche

1. Zusammengesetztes Strukturteil (10) für ein Kraftfahrzeug des Typs, der aufweist:
- eine erste (12A) und zweite (12B) Matte, wobei jede Matte Fasern und ein faserbindendes Harz umfasst, und
- einen Abstandshalter (14), der zwischen der ersten (12A) und der zweiten (12B) Matte angeordnet ist, wobei die erste (12A) und die zweite (12B) Matte an entgegengesetzten Seiten des Abstandshalters (14) befestigt sind, wobei mindestens eine der ersten (12A) und der zweiten (12B) Matte mindestens ein kontinuierliches Faservlies (16) aufweist, **dadurch gekennzeichnet, dass** das Vlies ein Flächengewicht von weniger als oder gleich 150 g/m² aufweist, wobei das Vlies (16) eine Vielzahl von parallelen Fasern umfasst, die durch ein wärmehärtbares Harz miteinander verbunden sind, wobei mindestens einige der Fasern jedes Vlieses (16) eine Länge von mehr als 20 cm, insbesondere 50 cm, aufweisen.

2. Strukturteil (10) nach Anspruch 1, bei dem mindestens eine, vorzugsweise jede, der ersten (12A) und zweiten (12B) Matte eine Mehrzahl von gestapelten kontinuierlichen Faservliesen (16) umfasst, beispielsweise zwischen drei und acht gestapelten Vliesen (16).

3. Strukturteil (10) nach Anspruch 2, bei dem die Vliese (16) so gestapelt sind, dass die parallelen Fasern jedes Vlieses (16) so angeordnet sind, dass sie mit den parallelen Fasern jedes anderen benachbarten Vlieses einen von Null verschiedenen Winkel, insbesondere einen rechten Winkel, bilden.

4. Strukturelement (10) nach Anspruch 2 oder 3, bei dem jede der ersten (12A) und zweiten (12B) Matte eine Mehrzahl von gestapelten kontinuierlichen Faservliesen (16) aufweist, wobei die erste (12A) und zweite (12B) Matte jeweils eine unterschiedliche Anzahl von gestapelten Vliesen (16) umfassen.

5. Strukturteil (10) nach einem der vorhergehenden Ansprüche, bei dem zumindest einige der parallelen Fasern Naturfasern sind, beispielsweise Flachs, Hanf, Kenaf oder Jute.

6. Strukturteil (10) nach einem beliebigen der vorhergehenden Ansprüche, bei dem zumindest ein Teil der parallelen Fasern Kunst- oder Synthetikfasern, insbesondere thermoplastische Fasern, sind.

7. Verfahren zur Herstellung eines Strukturverbundteils (10) eines Kraftfahrzeugs nach einem beliebigen der vorhergehenden Ansprüche, aufweisend:
- Herstellen einer Matte (12A, 12B), die folgenden Schritte umfassend:
• einen Schritt des Zuführens eines kontinuierlichen Faser vlieses (16), das lange Fasern umfasst, wobei mindestens ein Teil der langen Fasern des Vlieses eine Länge von mehr als 20 cm, insbesondere 50 cm, aufweist, wobei das Vlies ein Flächengewicht von kleiner als oder gleich 150 g/m² hat, und
• einen Schritt des Imprägnierens des Vlieses (16) mit einer Verbindung, die ein wärmehärtendes Harz aufweist,
- Zusammensetzen eines Abstandshalters (14) mit einer ersten (12A) und zweiten (12B) Matte, von denen mindestens eine ein kontinuierliches Faservlies (16) umfasst, wobei der Abstandshalter zwischen der ersten (12A) und zweiten (12B) Matte angeordnet ist, wobei die erste (12A) und zweite (12B) Matte an entgegengesetzten Seiten des Abstandshalters (14) befestigt werden.

8. Herstellungsverfahren nach Anspruch 7, **dadurch gekennzeichnet, dass** die Verbindung zum Imprägnieren mindestens einen Hilfsstoff, beispielsweise Pigmente oder Farbstoffe, ein Tensid und/oder ein Verdickungsmittel enthält.

9. Herstellungsverfahren nach Anspruch 7 oder 8, bei dem der Schritt des Imprägnierens mittels zweier Walzen durchgeführt wird, von denen mindestens eine Rillen zur Aufnahme der Verbindung aufweist, wobei das Faservles (16) zwischen den Walzen hindurchläuft, derart dass die Walzen einen Druck auf das Vlies (16) ausüben, der das Eindringen der Masse in das Vlies (16) gewährleistet.

10. Herstellungsverfahren nach Anspruch 7 oder 8, bei dem der Schritt des Imprägnierens ein Aufsprühen der Verbindung auf das Vlies (16), gefolgt von einem Abquetschen umfasst.

11. Herstellungsverfahren nach Anspruch 7 oder 8, bei dem der Schritt des Imprägnierens ein Aufsprühen einer Verbindung auf das Vlies (16), gefolgt von einer Trocknung, dann eine Imprägnierung mittels zweier Walzen durchgeführt wird, von denen mindestens eine Rillen zur Aufnahme der Verbindung aufweist, wobei das Faservlies (16) zwischen den Walzen hindurchläuft, derart dass die Walzen einen Druck auf das Vlies (16) ausüben, der das Eindringen der Masse in das Vlies (16) gewährleistet.

12. Verfahren zur Herstellung nach einem beliebigen der Ansprüche 8 bis 11, wobei die Verbindung einen hohen Trockenextrakt aufweist.

13. Herstellungsverfahren nach einem beliebigen der Ansprüche 7 bis 12, bei dem jedes kontinuierliche Faservlies (16) während der folgenden Schritten hergestellt wird:
- einen Schritt des parallelen Zuführens einer Mehrzahl von getrennten Faserbandelementen, wobei mindestens ein Bandelement lange Fasern, insbesondere natürliche lange Fasern, enthält;
- einen Schritt des Verteilens von benachbarten Bandelementen über ein Feld von Spitzen, um ein Band aus parallelen Fasern zu bilden;
- einen Schritt des Spannens und Streckens der Bahn in dem Feld von Spitzen parallel zu einer Laufachse;
- einen Schritt des Verbindens der Fasern des gezogenen Bandes zur Bildung des Vlieses (16).

14. Herstellungsverfahren nach einem der Ansprüche 7 bis 13, die folgenden Schritte umfassend:
- einen Schritt des Stapelns einer ersten Matte (12A), eines Abstandshalters (14) und einer zweiten Matte (12B) in einer Heizform, wobei der Abstandshalter (14) zwischen der ersten (12A) und der zweiten (12B) Matte angeordnet ist und mindestens eine der ersten (12A) und der zweiten (12B) Matte mindestens ein kontinuierliches Vlies aus Fasern (16) umfasst, das mit der ein wärmehärtendes Harz aufweisenden Verbindung imprägniert ist,
- einen Schritt des Zusammendrückens und Erhitzens des Stapels, wobei das Erhitzen bei einer Temperatur und während einer Zeit durchgeführt wird, die das Vernetzen des wärmehärtenden Harzes ermöglicht.

## Claims

1. A structural part (10) for a motor vehicle, of the type comprising:
- first (12A) and second (12B) mats, each mat comprising fibers and a resin binding the fibers, and
- a separator (14) inserted between the first (12A) and second (12B) mats, the first (12A) and second (12B) mats being fixed on opposite faces of the separator (14), wherein at least one of the first (12A) and second (12B) mats includes at least one continuous web of fibers (16), **characterized in that** said web (16) has a grammage less than or equal to 150 g/m², said web (16) comprising a plurality of parallel fibers bonded together by a thermosetting resin, at least part of the fibers of each web (16) having a length greater than 20 cm, in particular greater than 50 cm.

2. The structural part (10) according to claim 1, wherein at least one, preferably each, of the first (12A) and second (12B) mats includes a plurality of continuous webs (16) of stacked fibers, for example between three and eight stacked webs (16).

3. The structural part (10) according to claim 2, wherein the webs (16) are stacked such that the parallel fibers of each web (16) are positioned so as to form a non-zero angle, in particular a right angle with the parallel fibers of each other adjacent web.

4. The structural part (10) according to claim 2 or 3, wherein each of the first (12A) and second (12B) mats including a plurality of continuous webs of stacked fibers (16), the first (12A) and second (12B) mats respectively include different numbers of stacked webs (16).

5. The structural part (10) according to any one of the preceding claims, wherein at least some of the parallel fibers are natural fibers, for example linen, hemp, kenaf or jute.

6. The structural part (10) according to any one of the preceding claims, wherein at least some of the parallel fibers are artificial or synthetic fibers, in particular thermoplastic.

7. A method for manufacturing a structural composite part (10) of a motor vehicle according to any one of the preceding claims, **characterized in that** it includes:
- manufacturing a mat (12A, 12B), comprising the following steps:
• a step for providing a continuous web of fibers (16) comprising long fibers, at least some of the long fibers of the web having a length greater than 20 cm, in particular greater than 50 cm, the web having a grammage less than or equal to 150 g/m², and
• a step for impregnating the web (16) with a compound including a thermosetting resin,
- the assembly of a separator (14) with first (12A) and second (12B) mats, at least one of which includes a continuous web of fibers (16), the separator being inserted between the first (12A) and second (12B) mats, the first (12A) and second (12B) mats being fixed on opposite faces of the separator (14).

8. The manufacturing method according to claim 7, wherein the impregnating compound includes at least one additive, for example pigments or dyes, a surfactant and/or a thickener.

9. The manufacturing method according to claim 7 or 8, wherein the impregnation step is carried out using two cylinders, at least one of which includes slots for receiving a compound, the web of fibers (16) passing between the cylinder such that the cylinders exert pressure on the web (16), ensuring the penetration of the compound in the web (16).

10. The manufacturing method according to claim 7 or 8, wherein the impregnation step includes vaporization of the compound on the web (16), followed by expressing.

11. The manufacturing method according to claim 7 or 8, wherein the impregnation step includes a vaporization of a compound on the web (16), following by drying, then an impregnation is carried out using two cylinders, at least one of which includes slots for receiving a compound, the web of fibers (16) passing between the cylinder such that the cylinders exert pressure on the web (16), ensuring the penetration of the compound in the web (16).

12. The manufacturing method according to any one of claims 8 to 11, wherein the compound has a high solid content.

13. The manufacturing method according to any one of claims 7 to 12, wherein each continuous web of fibers (16) is produced over the following steps:
- a step for bringing a plurality of separate ribbons of fibers into parallel, at least one ribbon containing long fibers, in particular natural long fibers;
- a step for dispersion of the adjacent ribbons through a pin field to form a strip of parallel fibers;
- a step for tensing and stretching the strip in the pin field parallel to a movement axis;
- a step for bonding the fibers of the stretched strip to form the web (16).

14. The manufacturing method according to any one of claims 7 to 13, comprising the following steps:
- a step for stacking, in a heating mold, a first mat (12A), a separator (14) and a second mat (12B), the separator (14) being positioned between the first (12A) and second (12B) mats, and at least one of the first (12A) and second (12B) mats including at least one continuous web of fibers (16) impregnated with the compound including a thermosetting resin,
- a step for compression and heating of the stack, the heating being done at a temperature and for a duration allowing the cross-linking of the thermosetting resin.
